# EUROPEAN PATENT SPECIFICATION

(11) **EP 3 487 166 B1**
(45) Date of publication and mention of the grant of the patent: **05.01.2022**
(21) Application number: 17827446.0
(22) Date of filing: 30.06.2017
(51) Int. Cl.: H04N 5/3745, H04N 5/347

(54) **SOLID-STATE IMAGING ELEMENT, METHOD FOR OPERATING SOLID-STATE IMAGING ELEMENT, IMAGING DEVICE, AND ELECTRONIC DEVICE**
FESTKÖRPERBILDGEBUNGSELEMENT, VERFAHREN ZUM BETRIEB DES FESTKÖRPERBILDGEBUNGSELEMENTS, BILDGEBUNGSVORRICHTUNG UND ELEKTRONISCHE VORRICHTUNG
ÉLÉMENT D'IMAGERIE À SEMI-CONDUCTEURS, PROCÉDÉ D'EXPLOITATION D'UN ÉLÉMENT D'IMAGERIE À SEMI-CONDUCTEUR, DISPOSITIF D'IMAGERIE ET DISPOSITIF ÉLECTRONIQUE

(30) Priority: 15.07.2016 JP 2016139999
(43) Date of publication of application: 22.05.2019
(73) Proprietor: Sony Semiconductor Solutions Corporation, Atsugi-shi, Kanagawa 243-0014 (JP)
(72) Inventor: NIWA, Atsumi, Atsugi-shi Kanagawa 243-0014 (JP); KUMAGAI, Oichi, Atsugi-shi Kanagawa 243-0014 (JP); FUTAMI, Shinichiro, Atsugi-shi Kanagawa 243-0014 (JP); ANAS, Bostamam, Atsugi-shi Kanagawa 243-0014 (JP); NAKAMIZO, Masahiko, Atsugi-shi Kanagawa 243-0014 (JP)
(74) Representative: MFG Patentanwälte Meyer-Wildhagen Meggle-Freund Gerhard PartG mbB
(86) International application number: PCT/JP2017/024104
(87) International publication number: WO 2018/012316

(56) References cited:
- EP-A1- 2 753 073
- WO-A1-2014/200939
- WO-A1-2016/013413
- JP-A- 2015 039 086
- JP-A- 2016 111 425
- JP-A- 2016 111 425
- US-A1- 2006 274 176
- US-A1- 2012 312 964

## Description

### Technical Field

The present disclosure relates to a solid-state imaging device, a solid-state imaging device operating method, an imaging apparatus, and an electronic apparatus, and particularly relates to a solid-state imaging device, a solid-state imaging device operating method, an imaging apparatus, and an electronic apparatus that can realize an image at a low resolution with low power consumption without deteriorating imaging characteristics of all pixels.

### Background Art

With a recent increase in the number of applications for mobile devices and wearable devices, demand of power reduction rises. To meet this demand, the development of a system that autonomously optimizes power (that performs imaging by consuming power only when necessary) by using a sensing mode (for low resolution imaging) which is a mode other than an imaging mode requiring high power consumption and in which simple recognition is realized with low power consumption with which it is possible to always activate a CIS (CMOS (Complementary Metal Oxide Semiconductor) Image Sensor) is underway.

A technique for reducing the number of readouts in accordance with a resolution is thus proposed (refer to PTL 1).

PTL 2 discloses an imaging device which reduces capacitance of a charge accumulation part (floating diffusion) of each pixel unit.

PTL 3 describes an image pickup apparatus including a plurality of pixels each including a read-out node to which an electric charge generated in a photoelectric conversion unit is transferred, an output unit configured to convert the electric charge transferred to the read-out node into a voltage and output the resultant voltage to a signal line, and a switch including a first node electrically connected to the read-out node. Each switch includes a second node different from the first node, and a particular number of second nodes are electrically connected to a common bypass wiring.

PTL 4 discloses an apparatus and a method for generating a wide dynamic range image by executing a pixel value combination process of a plurality of different exposure time setting pixels. Control of a different exposure time is performed for each of a plurality of pixels of the same colors configuring a pixel block and an addition pixel value obtained by adding outputs of the plurality of pixels of the same colors of the pixel block is generated. The generation of the addition pixel value is executed in an operation unit having an adding unit that that adds the outputs of the plurality of pixels of the same colors of the pixel block.

PTL 5 describes a pixel array within an integrated-circuit image sensor.

### Citation List

### Patent Literature

PTL 1: JP 2013-138327 A
PTL 2: US 2016/165163 A1
PTL 3: US 2012/312964 A1
PTL 4: EP 2753073 A1
PTL 5: WO 2014/200939 A1

### Summary

### Technical Problem

However, with the technique of PTL 1, there is no choice but to reduce power by a scheme for analog summation of a unit of shared pixels or of adjacent shared pixels for achieving reduction of the resolution. In a case of a large difference between a resolution demanded during imaging and that demanded during sensing, it is necessary to perform a readout at a higher resolution than necessary, perform AD conversion (Analog/Digital conversion), and then reduce the resolution for a digital signal process. Thus, there is a limit to achieving low power consumption.

The present disclosure has been achieved in the light of such situations and is intended, in particular, to realize an image at a low resolution with low power consumption without deteriorating imaging characteristics of all pixels.

### Solution to Problem

According to a first aspect the invention provides a solid-state imaging device in accordance with claim 1. According to a second aspect the invention provides a solid-state imaging device operating method in accordance with claim 7. Further aspects of the invention are set forth in the dependent claims, the drawings and the following description of embodiments. A solid-state imaging device according to one aspect of the present disclosure is a solid-state imaging device including an FD (floating diffusion) set in a unit of shared pixels that are at least one or more pixels, a floating interconnection line connecting the FDs each set in the unit of the shared pixels, the FDs being provided in each row having a predetermined row number, and a switch changing over between connection and disconnection of the floating interconnection line to and from the FDs in each row.

The switch can be made a plurality of switches connectable to the floating interconnection line and corresponding to the FDs in each row having the predetermined row number, and the switches to be subjected to summation among the plurality of switches can be connected to the floating interconnection line in response to a demanded resolution.

The switch can be made the plurality of switches connectable to the floating interconnection line and corresponding to the FDs in each row having the predetermined row number, and the switches to be subjected to summation for the shared pixels among the plurality of switches can be connected to the floating interconnection line in response to the demanded resolution.

The switch can be made the plurality of switches connectable to the floating interconnection line and corresponding to the FDs in each row having the predetermined row number, and the switches for the shared pixels to be subjected to summation among the plurality of switches can be connected to the floating interconnection line at the same timing in response to the demanded resolution.

The switch can be made the plurality of switches connectable to the floating interconnection line and corresponding to the FDs in each row having the predetermined row number, and the switches for the shared pixels to be subjected to summation among the plurality of switches can be connected to the floating interconnection line at different timing in response to the demanded resolution so that the timing of connection of the switches to the floating interconnection line is staggered.

The solid-state imaging device may include a vertical signal line transferring pixel signals of the shared pixels via the FDs in a unit of columns of the shared pixels, and a column straddling floating interconnection line transferring the pixel signals to different vertical signal lines and connecting a plurality of floating interconnection lines in different columns.

The shared pixels can be each configured with a plurality of pixels in a unit of a pixel array that is a Bayer array.

The shared pixels can be configured with a plurality of pixels having different exposure time.

The shared pixels can each include the plurality of pixels having the different exposure time, the number of the pixels having one of the different exposure time being equal to the number of the pixels having another exposure time in each shared pixel.

The shared pixels can be each configured with a plurality of pixels having the different exposure time in each shared pixel.

A solid-state imaging device operating method according to one aspect of the present disclosure is a solid-state imaging device operating method, a solid-state imaging device including an FD (floating diffusion) set in a unit of shared pixels that are at least one or more pixels, a floating interconnection line connecting the FDs each set in the unit of the shared pixels, the FDs being provided in each row having a predetermined row number, and a switch changing over between connection and disconnection of the floating interconnection line to and from the FDs in each row. The solid-state imaging device operating method includes changing over, by the switch, between the connection and the disconnection of the floating interconnection line to or from the FDs in each row.

An imaging apparatus according to one aspect of the present disclosure is an imaging apparatus including an FD (floating diffusion) set in a unit of shared pixels that are at least one or more pixels, a floating interconnection line connecting the FDs each set in the unit of the shared pixels, the FDs being provided in each row having a predetermined row number, and a switch changing over between connection and disconnection of the floating interconnection line to and from the FDs in each row.

An electronic apparatus according to one aspect of the present disclosure is an electronic apparatus including an FD (floating diffusion) set in a unit of shared pixels that are at least one or more pixels, a floating interconnection line connecting the FDs each set in the unit of the shared pixels, the FDs being provided in each row having a predetermined row number, and a switch changing over between connection and disconnection of the floating interconnection line to and from the FDs in each row.

According to one aspect of the present disclosure, an FD (floating diffusion) is set in a unit of shared pixels that are at least one or more pixels, a floating interconnection line connects the FDs each set in the unit of shared pixels, the FDs being provided in each row having a predetermined row number, and a switch changes over between connection and disconnection of the floating interconnection line to and from the FDs in each row.

### [Advantageous Effect of Invention]

According to one aspect of the present disclosure, it is possible to realize an image at a low resolution with low power consumption without deteriorating imaging characteristics of all pixels.

### [Brief Description of Drawings]

[FIG. 1]

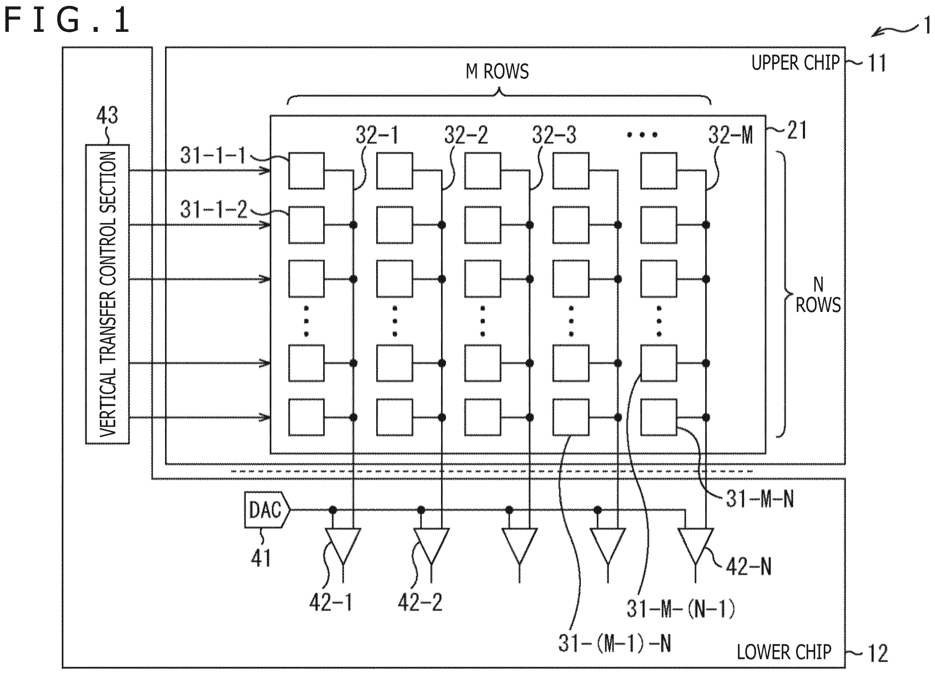

   FIG. 1 is an illustrative diagram of an example of a configuration of an image sensor in the present disclosure.
[FIG. 2]

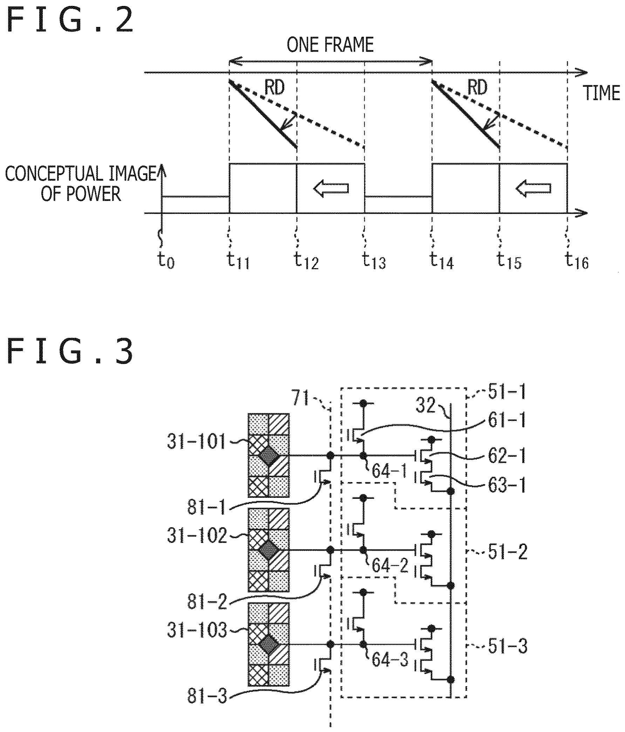

   FIG. 2 is an illustrative diagram of power reduction of the image sensor.
[FIG. 3]
   FIG. 3 is an illustrative diagram of a scheme for realizing power reduction of a conventional image sensor.
[FIG. 4]

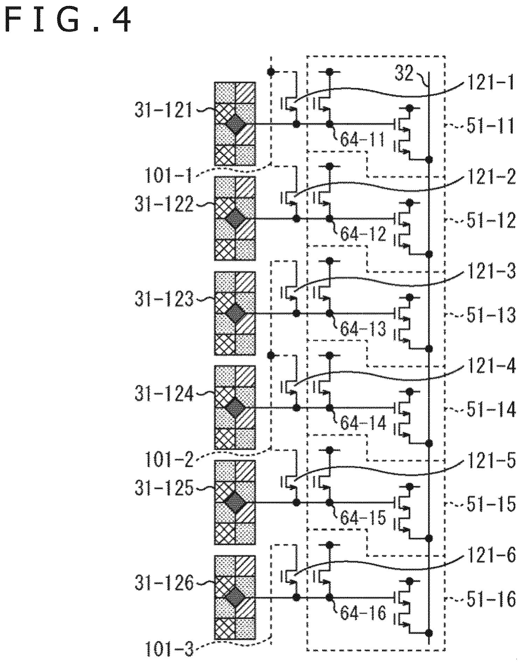

   FIG. 4 is an illustrative diagram of a scheme for realizing power reduction of the image sensor in the present disclosure.
[FIG. 5]

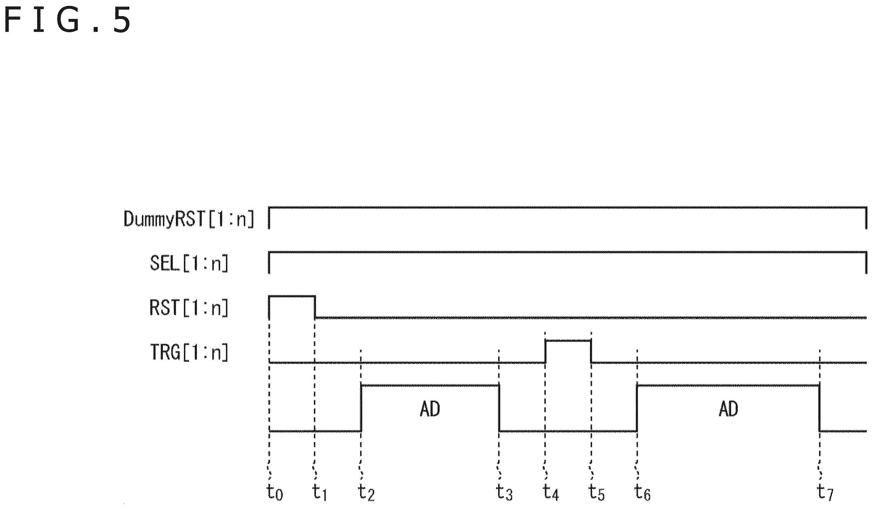

   FIG. 5 is a timing chart describing an operating method at a time of realizing the power reduction of the image sensor in FIG. 4.
[FIG. 6]

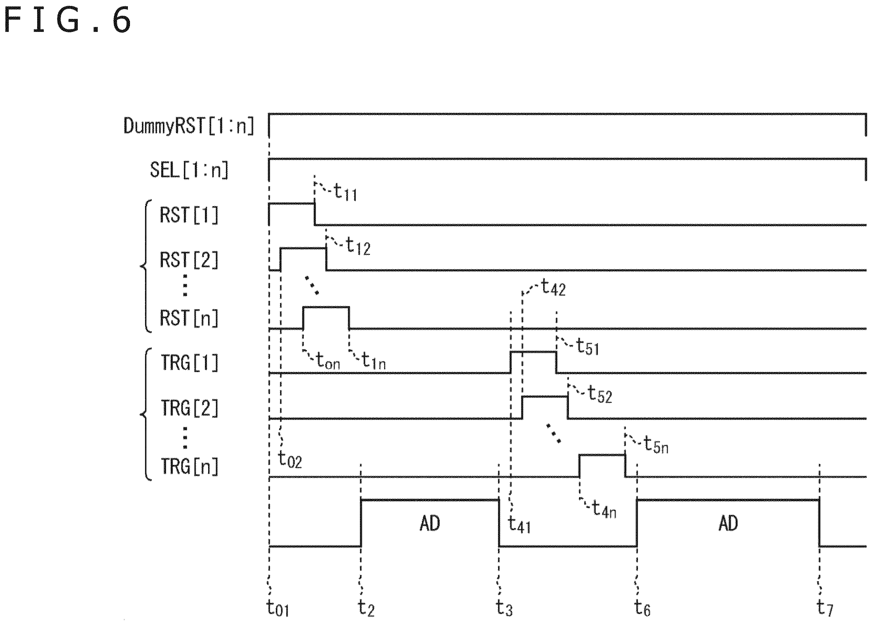

   FIG. 6 is a timing chart describing an operation in a first modification.
[FIG. 7]

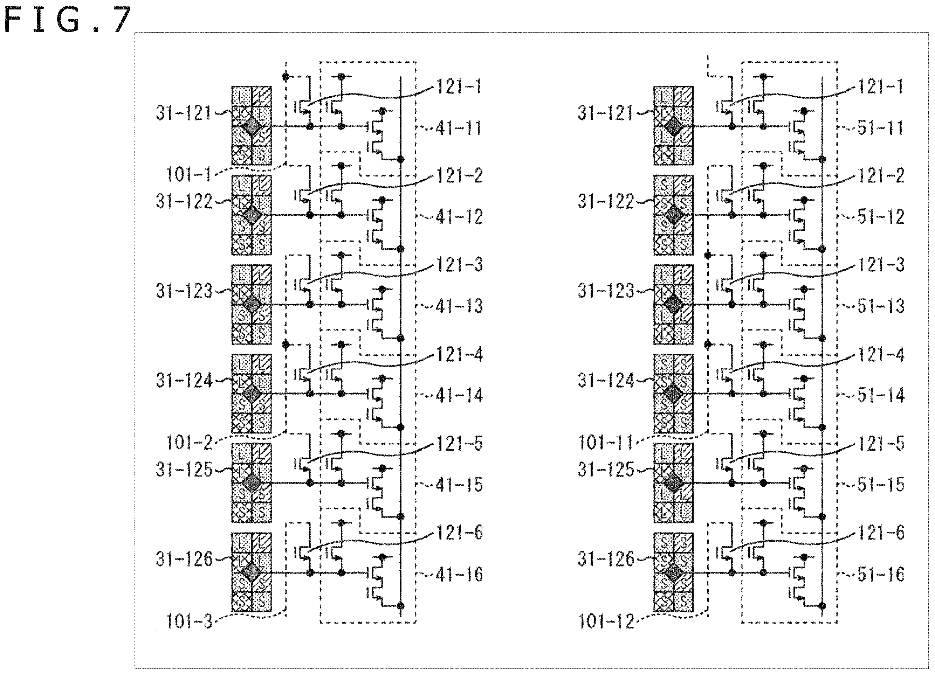

   FIG. 7 is an illustrative diagram of an example of a configuration of an image sensor in a second modification.
[FIG. 8]

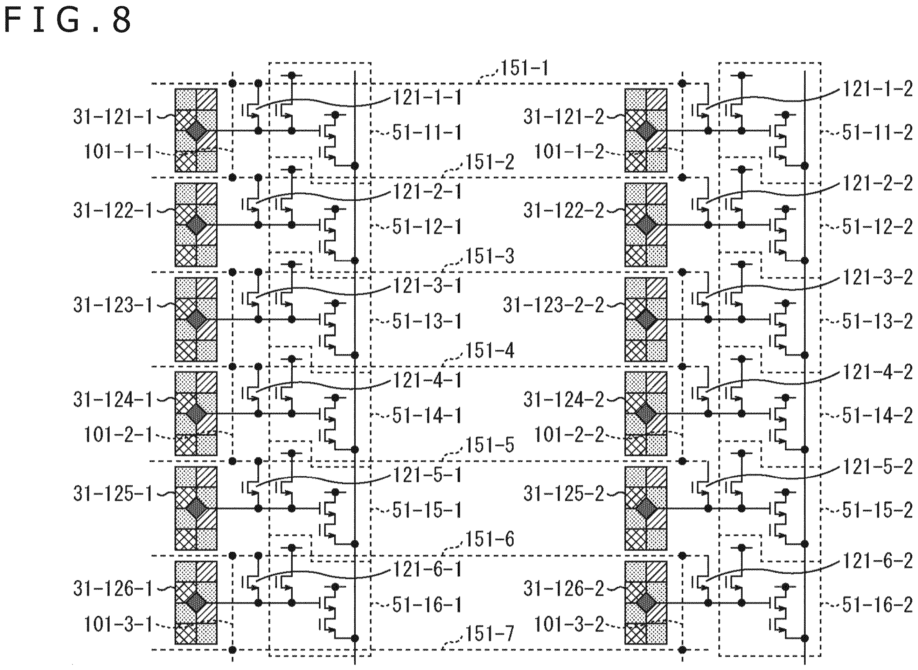

   FIG. 8 is an illustrative diagram of an example of a configuration of an image sensor in a second modification.
[FIG. 9]

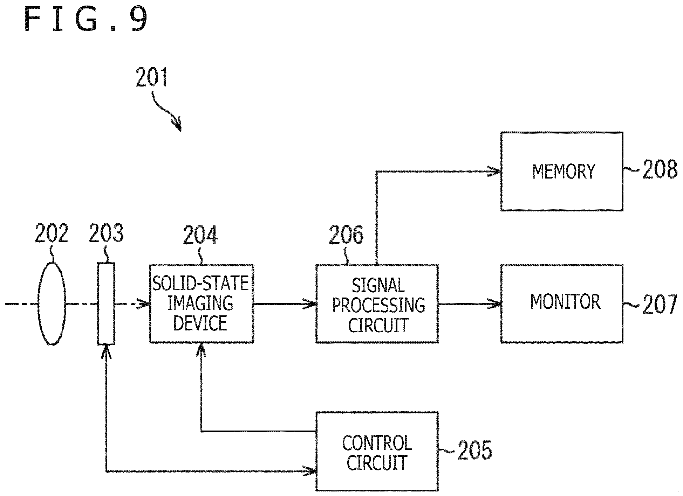

   FIG. 9 is a block diagram illustrating an example of a configuration of an imaging apparatus as an electronic apparatus to which the image sensor in the present disclosure is applied.
[FIG. 10]

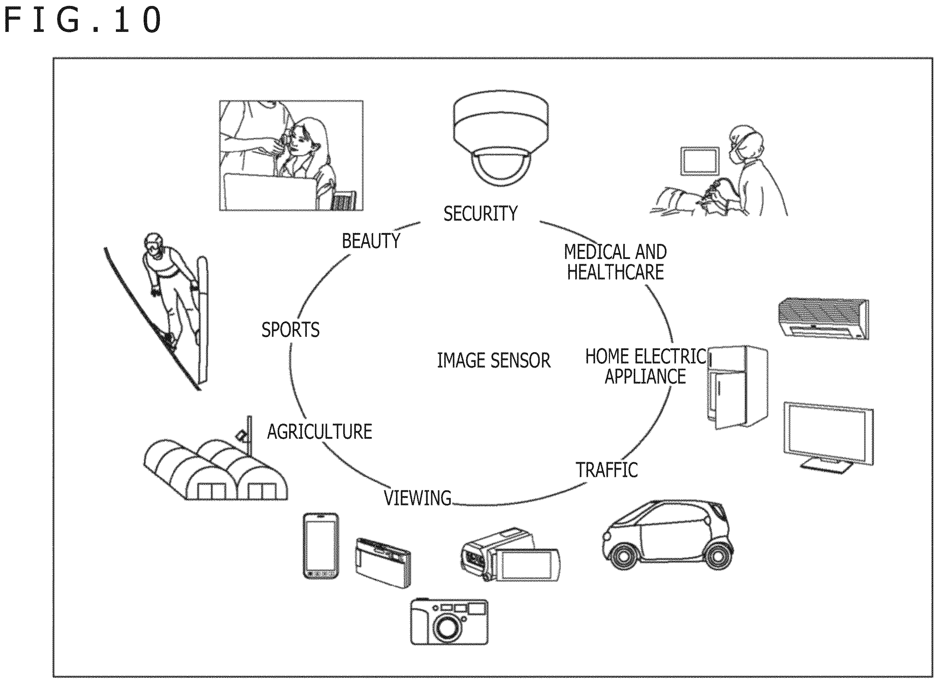

   FIG. 10 is an illustrative diagram of a usage example of an image sensor to which a technique of the present disclosure is applied.

### [Description of Embodiments]

Preferred embodiments of the present disclosure will be described hereinafter in detail with reference to the accompanying drawings. It is noted that, in the present specification and the drawings, constituent elements having a substantially identical functional configuration are denoted by the same reference characters to omit repetitive description.

### <Example of pixel configuration of image sensor in present disclosure>

An example of a configuration of an image sensor in the present disclosure will be described with reference to FIG. 1. An image sensor 1 depicted in FIG. 1 is configured to dispose a structure in an array with a predetermined number of pixels assumed as a unit. This unit may be one pixel or a structure sharing a plurality of pixels. Description will be continued below assuming that this unit is shared pixels that are a plurality of pixels.

The image sensor of FIG. 1 has a stacked configuration of an upper chip 11 and a lower chip 12, a pixel array 21 is configured on the upper chip 11, and a DAC (Digital Analog Converter) 41, comparators 42-1 to 42-M, and a vertical transfer control section 43 are provided on the lower chip 12.

In the pixel array 21, shared pixels 31 that are a structure sharing a plurality of pixels are assumed as a unit and shared pixels 31-1-1 to 31-M-N are provided in N rows in a vertical direction and in M columns in a horizontal direction.

It is noted that, in a case in which it is unnecessary to particularly distinguish the shared pixels 31-1-1 to 31-M-N, vertical signal lines 32-1 to 32-M, and the comparators 42-1 to 42-M, the shared pixels, the vertical signal lines, and the comparators will be referred to simply as "shared pixels 31," "vertical signal lines 32," and "comparators 42," and the same thing is true for other configurations.

Here, the DAC 41 and the comparators 42 configure a column AD circuit. In other words, each comparator 42 compares a pixel signal that is an analog signal supplied via the vertical signal line 32 with a reference signal supplied from the DAC 41, and outputs a comparison result. A counter, not depicted, that counts a count value synchronously with a clock for changing an output voltage of the reference signal is provided in rear of each comparator 42. This counter outputs the count value as a digital signal in response to the comparison result from the comparator 42.

The shared pixels 31-1-1 to 31-M-N, which are structured such that a plurality of pixels is shared, read out pixel signals via the vertical signal lines 32-1 to 32-M on the basis of a control signal supplied by the vertical transfer control section 43 per row. The read pixel signals that are analog signals are converted into digital data by the column AD (Analog/Digital converter circuit) in each row.

Owing to this, it is necessary to perform AD conversion by the number of rows of the shared pixels 31 × N times to read out signals of all imaging surface.

<Relationship between the number of readouts and power consumption>

A relationship between the number of readouts and the power consumption will next be described with reference to FIG. 2. As depicted in FIG. 2, the image sensor needs to read out all data within one frame, power consumption increases during a readout operation, and it is normal to exercise control to suppress the power consumption in a blank period after the readout.

Owing to this, in a case of a constant frame rate, reducing the number of readouts contributes to reducing power consumption. In a conventional image sensor, to reduce the number of readouts, pixel signal summation is performed and a collective readout is performed, thereby reducing the number of readouts. As for summation, there are several variations including FD (floating diffusion) summation between the shared pixels 31, capacity summation between adjacent the VSLs (vertical signal lines), and source follower summation.

However, summation is basically limited to that within the shared pixels 31 or that between the adjacent shared pixels 31. Owing to this, at a time of performing imaging with a resolution greatly reduced relative to the number of pixels of the image sensor itself, there is a limit to power reduction since reduction in the number of readouts is limited even using these pixel summation schemes.

Therefore, as disclosed in PTL 1 described above, the technique that can reduce the number of readouts in accordance with the resolution is proposed.

It is noted that it is depicted in FIG. 2 that at a time of reading out pixels in all rows for reading all the pixels, it is necessary to take time t11 to t13 to read out pixels within one frame, but that reducing the number of readouts to make the resolution lower by the pixel summation enables the time to be shortened to time t11 to t12 and power saving.

### <Conventional power reduction technique>

According to a conventional technique, there is provided a pixel arrangement such that as depicted by interconnection lines indicated by dotted lines of FIG. 3, an FD coupling interconnection line 71 connecting FDs 64 for the shared pixels 31 is provided, switches 81-1 to 81-3 for connecting the FD coupling interconnection line 71 are disposed between the rows of the shared pixels 31, and a combination of turning on/off of the switches 81 is changed in response to a necessary resolution to make it possible to reduce the number of readouts.

With the configuration depicted in FIG. 3, changing over between on and off of the switches 81 makes it possible to couple the FDs 64-1 to 64-3 in response to the necessary resolution and to realize FD summation in a range of straddling the shared pixels 31-101 to 31-103.

On the other hand, it is preferable to minimize an FD capacity to increase a gain (conversion efficiency) at a time of converting electrons generated by photoelectric conversion into a voltage in each pixel in the image sensor. However, with the configuration of FIG. 3, turning part of the FD coupling interconnection line 71 into a connected state even if the switches 81 are turned off causes an increase in a parasitic capacity and a reduction in the conversion efficiency. This possibly deteriorates an image quality at a time of operating all the pixels.

It is noted that, in FIG. 3, the shared pixels 31-101 to 31-103, each of which is configured with eight pixels in total, that is, two sets of configurations of two pixels × two pixels in a Bayer array that are connected in the vertical direction, are connected to the same vertical signal line 32, and pixel circuits 51-1 to 51-3 are provided to correspond to the shared pixels 31-101 to 31-103, respectively. The pixel circuit 51-1 includes a reset (RST) transistor 61-1, an amplification transistor 62-1, a selection (SEL) transistor 63-1, and the FD 64-1.

It is noted that reference characters such as the reset (RST) transistor 61-1, the amplification transistor 62-1, the selection (SEL) transistor 63-1, and the FD 64-1, are added only in the pixel circuit 51-1 in FIG. 3, reference characters are omitted in the other pixel circuits 51, and the reference characters will be also omitted as needed, hereinafter.

The RST transistor 61 is a transistor that is turned on or off at a time of resetting a photodiode of each pixel or at a time of resetting the FD 64. The amplification transistor 62 has a gate to which the FD 64 is connected, amplifies a reference potential or a signal potential at the FD 64, and outputs the amplified reference potential or signal potential to the selection (SEL) transistor 63 as a pixel signal. The selection (SEL) transistor 63 is turned on or off on the basis of a selection signal SEL, outputs and transfers the pixel signal amplified by the amplification transistor 62 to the vertical signal line 32.

In addition, although not depicted, the photodiode and a transfer (TRG) transistor are provided in each of the eight pixels in the shared pixels 31. The transfer (TRG) transistor is turned on or off in response to turning on or off of the reset (RST) transistor, and resets the photodiode or transfers a charge accumulated in the photodiode to the FD 64. While each pixel circuit 51 of FIG. 3 is configured with the four transistors described above, the pixel circuit 51 may have a configuration other than that of FIG. 3, for example, may be configured with the three transistors without the transfer (TRG) transistor.

Furthermore, each of the pixel circuits 51-2 and 51-3 has a similar configuration. With this configuration, as for the FDs 64-1 to 64-3, switches 81-1 to 81-3 are provided in the FD coupling interconnection line 71 to couple the FDs 64-1 to 64-3 for the shared pixels 31-101 to 31-103 to the FD coupling interconnection line 71, and the FDs 64-1 to 64-3 are coupled to the FD coupling interconnection line 71 by turning on or off the switches 81-1 to 81-3.

The vertical transfer control section 43 generates control signals such as a transfer signal TRG, a reset signal RST, and the selection signal SEL for exercising control to turn on or off each transfer (TRG) transistor, each reset (RST) transistor 51, and each selection transistor 53, and controls each pixel circuit 51 to operate in each row on the basis of these control signals.

### <Example of configuration of image sensor in present disclosure>

An example of a configuration of the image sensor 1 in the present disclosure will next be described with reference to FIG. 4. It is noted that configurations identical in function to those in FIG. 3 are denoted by the same names and the same reference characters and description thereof will be omitted as appropriate. It is noted, however, that in FIG. 4, the shared pixels 31 are shared pixels 31-121 to 31-126 and the pixel circuits 51 are pixel circuits 51-11 to 51-16. In addition, the FDs 64 in the pixel circuits 51-11 to 51-16 are FDs 64-11 to 64-16. In other words, in FIG. 4, even the configurations identical in function to those in FIG. 3 are denoted by different reference characters after "-."

The configuration in FIG. 4 differs from that in FIG. 3 in that floating interconnection lines 101-1 to 101-3 sharing the FDs 64 with a predetermined number of shared pixels 31 assumed as a unit and switches 121-1 to 121-6 are provided as an alternative to the common FD coupling interconnection line 71 and the switches 81 changing over the coupling.

For example, in FIG. 4, the floating interconnection line 101-2 couples the three FDs 64-13 to 64-15 for the shared pixels 31-123 to 31-125 by changing over the FDs 64-13 to 64-15 by turning on or off the switches 121-3 to 121-5.

While FIG. 4 illustrates an example of the floating interconnection lines 101 in a case in which the maximum number of shared (coupled) FDs 64 is three, each floating interconnection line 101 may be configured such that the maximum number of FDs 64 coupled to the floating interconnection line 101 is other than three. In that case, the switches 121 are provided to correspond to the maximum number of coupled FDs 64.

In FIG. 4, each floating interconnection line 101 is not directly connected to the FDs 64 but connected to the FDs 64 via the switches 121. Owing to this, a plurality of FDs 64 is connected to the floating interconnection line 101 by turning on or off the switches 121 in response to a necessary resolution, and FD summation by a predetermined number of FDs 64 for a predetermined number of shared pixels 31 is realized.

In addition, in the image sensor 1, a dummy RST transistor is normally provided to ensure layout symmetry of each reset (RST) transistor 61. Using this dummy RST transistor as each switch 121 changing over between connection and disconnection of each FD 64 to and from the floating interconnection line 101 makes it possible to realize a function of coupling the FD 64 to the floating interconnection line 101 without additionally providing elements in each pixel and increasing an interconnection line parasitic capacity for the FD 64.

In other words, in the image sensor 1 in the present disclosure depicted in FIG. 4, a region that configures the FDs 64 subjected to FD summation is configured to be minimized, compared with the conventional image sensor depicted in FIG. 3. In addition, in the image sensor 1 in FIG. 4, adding the floating interconnection lines 101 for the FD summation enables connection of the FD 64 for the pixels for which it is desired to shrink a resolution to the floating interconnection line 101 for FD summation, thereby making it possible to realize the FD summation in response to the resolution. Furthermore, the floating interconnection lines 101 for summation can be disconnected at brakes of the pixels after shrinkage.

### <Operation at time of capturing image at low resolution>

An operation performed when the image sensor 1 in the present disclosure depicted in FIG. 4 captures an image at a low resolution will next be described with reference to a timing chart of FIG. 5.

In other words, this operation is similar to a readout operation performed in each pixel circuit 51 configured with the four basic transistors except that the switch 121 configured with the dummy RST transistor for the pixels to be subjected to summation is always turned on for realizing the FD summation.

In addition, a waveform of a control signal that is supplied from the vertical transfer control section 43 to each switch 121, which is indicated by the dummy RST transistor (DummyRST[1:n]), and that controls the switch 121 to be turned on or off (signal controlling the switch 121 to be turned on or off) is depicted in an uppermost stage of FIG. 5. Furthermore, a waveform of the selection signal SEL[1:n] supplied from the vertical transfer control section 43 to each selection transistor 53 is depicted in a second stage from the top. In addition, a waveform of the reset signal RST[1:n] supplied from the vertical transfer control section 43 to each reset (RST) transistor 52 is depicted in a third stage from the top. Moreover, a waveform of the transfer signal TRG[1:n] supplied from the vertical transfer control section 43 to each transfer (TRG) transistor in each pixel in the shared pixel 31 is depicted in a fourth stage from the top. Furthermore, a waveform indicating timing of AD conversion is depicted in a lowermost stage. In addition, [1:n] indicates herein an identifier for discriminating the waveforms in rows from one another and represents herein that the rows are all the rows from the first to the n-th rows.

In other words, at time t0, each switch 121 configured with the dummy RST transistor for the pixels to be subjected to summation in response to the resolution is turned on, on the basis of the control signal from the vertical transfer control section 43 for controlling the switch 121 to be turned on or off, and the FDs 64-13 to 64-15 for the shared pixels 31-123 to 31-125 are connected together via the floating interconnection line 101-2, and the selection transistors 63 are all turned on at the same time. While an example of turning on the switches 121 in all rows is depicted in FIG. 5, the number of the switches 121 turned on and positions of the switches 121 vary depending on the resolution.

Furthermore, when each reset (RST) transistor 61 is turned on to reset the FD 64 on the basis of the reset signal RST from the vertical transfer control section 43 from time t0 to t1, the reference potential is read. In addition, this reference potential is subjected to AD conversion at timing of time t2 to t3.

Moreover, when the transfer (TRG) transistor is turned on, on the basis of the transfer signal TRG from the vertical transfer control section 43 for controlling the transfer (TRG) transistor to be turned on or off to transfer the signal potential to the FD 64 from time t4 to t5, this signal potential is subjected to AD conversion at timing from time t6 to t7.

As a result, a difference between the signal potential and the reference potential that have been converted into digital signals is output as a pixel signal that is a digital signal.

Through the above operation, by using the pixel configuration performing charge summation straddling the unit of the shared pixels and a readout circuit with high power efficiency, it is possible to obtain an image at an average resolution on a whole surface or an image at a low resolution compatible with a simple recognition function with low power consumption without deteriorating so-called imaging characteristics of all pixels.

While the image sensor 1 in the present disclosure has been described with reference to the example of a so-called stacked image sensor configured such that the upper chip 11 on which the pixel array 21 is provided and the lower chip 12 on which the other configurations are provided are stacked, the image sensor 1 may have another configuration, for example, a configuration such that all the configurations are disposed on the same chip or a configuration such that configured with the two chips and the two chips are not stacked.

### <First modification>

The example of reading the reference potential and the signal potential converted into the digital signals by simultaneously turning on the reset (RST) transistors 61 for all the pixels (in all the rows) to be subjected to summation and further simultaneously turning on the transfer (TRG) transistors for all the pixels to be subjected to summation has been described above.

In this case, all the transistors are simultaneously driven for the pixels to be subjected to summation; however, there are characteristic concerns (such as deterioration in transfer characteristics due to a power supply drop of a drive signal driver) caused by simultaneous toggling using many control signals, and the influence of these concerns possibly prohibits appropriate pixel signals from being read out if the influence is conspicuous.

Therefore, for the pixels to be subjected to summation, the deterioration in the transfer characteristics and the like due to the power supply drop may be reduced by slightly staggering timing of turning on the reset (RST) transistors and timing of turning on the transfer (TRG) transistors among the rows, as depicted in FIG. 6.

More specifically, in FIG. 6, the vertical transfer control section 43 outputs the control signal (reset signal RST that is a pulse signal) for turning on the reset (RST) transistors 61 from time t01 to t11 for the first row, but outputs the control signal (reset signal RST that is the pulse signal) from time t02 slightly delayed behind the time t01 to time t12 for the second row. Likewise, control is exercised to output the control signal from slightly delayed time t03 to time t13 and so on for each of the third and the following rows.

Following this time staggering, in FIG. 6, the vertical transfer control section 43 outputs the control signal (transfer signal TRG that is a pulse signal) for turning on the transfer (TRG) transistors from time t41 to t51 for the first row, but outputs the control signal (transfer signal TRG that is the pulse signal) from time t42 slightly delayed behind the time t41 to time t52 for the second row. Likewise, control is exercised to output the control signal from slightly delayed time t43 to time t53 and so on for each of the third and the following rows.

It is thereby possible to suppress occurrence of the power supply drop by not simultaneously turning on the plurality of reset (RST) transistors 51, that is, by staggering the timing of the reset signals RST that are pulse waveforms to prevent the reset signals RST from rising at the same timing. As a result, it is possible to suppress the deterioration in the transfer characteristics.

### <Second modification>

While the example in which exposure time of all the pixels is constant has been described above, the FDs 64 for the shared pixels 31 that are a combination of pixels having different exposure time based on so-called HDR (High Dynamic Range) may be connected to the common floating interconnection lines 101.

For example, as indicated in a left part in FIG. 7, in a case in which two pixels × two pixels in an upper stage out of the eight pixels configuring each of the shared pixels 31 are subjected to long exposure (L) and two pixels × two pixels in a lower stage are subjected to short exposure (S) for all the shared pixels 31, similarly to the case of FIG. 4, each set of three shared pixels, such as shared pixels 31-123 to 31-125, may be changed over between a connected state and a disconnected state by turning on or off the switches 121-3 to 121-5 on the same floating interconnection line 101-2.

In addition, as indicated in a right part in FIG. 7, in a case in which the shared pixels 31 each configured with the eight pixels all of which are subjected to the long exposure (L) and the shared pixels 31 each configured with the eight pixels all of which are subjected to the short exposure (S) are alternately disposed, a set of four shared pixels 31-122 to 31-125 may be changed over between the connected state and the disconnected state by turning on or off the switches 121-2 to 121-5 on the same floating interconnection line 101-11.

It is noted that, as indicated in the left part in FIG. 7, in a case in which the number of the pixels subjected to the long exposure (L) is equal to the number of the pixels subjected to the short exposure (S) in each unit of the shared pixels 31, the number of shared FDs 64 on the floating interconnection line 101 can be arbitrarily set as long as the number is made uniform.

On the other hand, as indicated in the right part in FIG. 7, in a case in which the number of the pixels subjected to the long exposure (L) differs from the number of the pixels subjected to the short exposure (S), for example, in a case in which all the pixels are subjected to the long exposure (L) or all the pixels are subjected to the short exposure (S) in each unit of the shared pixels 31, it is desirable to set the number of shared FDs 64 on the floating interconnection line 101 to the number of FDs 64 such that the number of the pixels subjected to the long exposure (L) is equal to that of the pixels subjected to the short exposure (S) in shared pixels among the plurality of shared pixels 31. In other words, at a time of achieving the low resolution, keeping the pixels subjected to the long exposure (L) and the pixels subjected to the short exposure (S) in balance makes it possible to reduce the power consumption related to corrections or the like for an imbalance.

### <Third modification>

While the example of providing the floating interconnection lines 101 independently on each column has been described above, the floating interconnection lines may be set to straddle the columns.

In other words, in FIG. 8, floating interconnection lines 151 (151-1 to 151-7) connecting the adjacent columns are provided in addition to floating interconnection lines 101-1-1 to 101-3-1 and 101-1-2 to 101-3-2 in the vertical direction as in FIG. 4.

Such a configuration can realize shrinkage of the rows in the vertical direction and shrinkage of the columns in the horizontal direction, substantially thin out signals transferred on the vertical signal lines, and reduce the number of the column AD circuits to be used, thereby making it possible to reduce the power consumption at the time of the low resolution.

Switches changing over between the connected state and the disconnected state to and from the FDs 64 may be provided for the floating interconnection lines 151 in FIG. 8 so that the floating interconnection lines 121 in a column direction can be changed over between the connected state and the disconnected state.

### <Example of applications to electronic apparatus>

The image sensor 1 described above can be applied to various kinds of electronic apparatuses, for example, an imaging apparatus such as a digital still camera and a digital video camera, a cellular telephone equipped with an imaging function, or other apparatuses equipped with the imaging function.

FIG. 9 is a block diagram illustrating an example of a configuration of an imaging apparatus as an electronic apparatus to which the present technique is applied.

An imaging apparatus 201 depicted in FIG. 9 is configured with an optical system 202, a shutter device 203, a solid-state imaging device 204, a drive circuit 205, a signal processing circuit 206, a monitor 207, and a memory 208, and can capture a still image and a moving image.

The optical system 202 is configured with one or a plurality of lenses, guides light from a subject (incident light) to the solid-state imaging device 204, and forms an image on a light-receiving surface of the solid-state imaging device 204.

The shutter device 203 is disposed between the optical system 202 and the solid-state imaging device 204 and controls a light irradiation period and a light shielding period for the solid-state imaging device 204 in accordance with control of the drive circuit 1005.

The solid-state imaging device 204 is configured with a package including the solid-state imaging device described above. The solid-state imaging device 204 accumulates a signal charge for a certain period in response to the light imaged on the light-receiving surface via the optical system 202 and the shutter device 203. The signal charge accumulated in the solid-state imaging device 204 is transferred in accordance with a drive signal (timing signal) supplied from the drive circuit 205.

The drive circuit 205 outputs drive signals for controlling a transfer operation performed by the solid-state imaging device 204 and a shutter operation performed by the shutter device 203 to drive the solid-state imaging device 204 and the shutter device 203.

The signal processing circuit 206 performs various signal processes on the signal charge output from the solid-state imaging device 204. An image (image data) obtained by the signal processes performed by the signal processing circuit 206 is supplied to and displayed on the monitor 207 or supplied to and stored (recorded) in the memory 208.

Applying the image sensor 1 depicted in FIG. 1 in the present disclosure to the imaging apparatus 201 configured as described above as an alternative to the optical system 202, the shutter device 203, and the solid-state imaging device 204 described above makes it possible to similarly reduce the power consumption at a time of capturing an image at a low resolution without deteriorating imaging of an image at a high resolution using all the pixels.

### <Usage example of solid-state imaging device>

FIG. 10 is a diagram illustrating a usage example of using the image sensor 1 in FIG. 1 described above.

A camera module described above can be used in various cases of sensing light such as visible light, infrared light, ultraviolet light, and X-ray as illustrated, for example, below.

- An apparatus such as a digital camera and a mobile device with a camera function for capturing an image for use in viewing
- An apparatus for use in traffic applications such as a vehicle-mounted sensor that captures a front, a rear, surroundings, an interior, and the like of a vehicle, a monitoring camera that monitors travelling vehicles and roads, and a range-finding sensor that measures a distance between vehicles and the like for safe driving such as automatic stop, recognition of a driver state, and the like
- An apparatus for use in home electric appliances such as a TV set, a refrigerator, and an air conditioner for capturing a user gesture and operating such an appliance in accordance with the gesture
- An apparatus such as an endoscope and an apparatus performing angiography by receiving infrared light for use in medical and healthcare applications
- An apparatus such as a monitoring camera for crime prevention and a camera for human authentication for use in security applications
- An apparatus such as a skin measuring instrument that captures a skin and a microscope that captures a scalp for use in beauty applications
- An apparatus such as an action camera and a wearable camera for sports for use in sport applications
- An apparatus such as a camera that monitors conditions of fields and crops for use in agricultural applications

### [Reference Signs List]

1 Image sensor, 11 Pixel array, 21 Upper chip, 22 Lower chip, 31, 31-1-1 to 31-M-N Shared pixel, 32, 32-1 to 32-M Vertical signal line, 41 DAC, 42 Comparator, 43 Vertical transfer control section, 51, 51-1 to 51-3, 51-11 to 51-16 Pixel circuit, 61, 61-1 Reset (RST) transistor, 62, 62-1 Amplification transistor, 63, 63-1 Selection (SEL) transistor, 64, 64-1 FD, 71 FD coupling interconnection line, 81, 81-1 to 81-3 Switch, 101, 101-1 to 101-3 Floating interconnection line, 121, 121-1 to 121-6, 121-151 to 121-153, 121-161 to 121-164 Switch, 151, 151-1 to 151-7 Floating interconnection line

## Claims

1. A solid-state imaging device (1) comprising:
a plurality of FDs (floating diffusions), each FD (64) set in a unit of shared pixels (31) including at least two or more pixels;
a floating interconnection line (101) connecting the FDs (64) each set in the unit of the shared pixels (31), the FDs (64) being provided in each row having a predetermined row number; and
a switch (121) changing over between connection and disconnection of the floating interconnection line (101) to the FDs (64) in each row on a basis of control signals generated by a vertical transfer control section (43), wherein
the switch (121) includes a plurality of switches connectable to the floating interconnection line (101) and corresponding to the FDs (64) in each row having the predetermined row number, and
the switches to be subjected to summation among the plurality of switches being connected to the floating interconnection line (101) in response to a demanded resolution, wherein the demanded resolution is low in a sensing mode and high in an imaging mode of the solid-state imaging device (1), and
wherein among the plurality of switches being connected to the floating interconnection line (101) the switches for the shared pixels (31) to be subjected to summation are connected at slightly delayed times to the floating interconnection line (101) in response to the demanded resolution so that on a basis of the control signals generated by the vertical transfer control section (43) the timing of connections of the switches to the floating interconnection line (101) is staggered.

2. The solid-state imaging device (1) according to claim 1, further comprising:
a vertical signal line (32) transferring pixel signals of the shared pixels (31) via the FDs (64) in a unit of columns of the shared pixels (31); and
a column straddling floating interconnection line transferring the pixel signals to different vertical signal lines (32) and connecting a plurality of floating interconnection lines (101) in different columns.

3. The solid-state imaging device (1) according to claim 1, wherein
the shared pixels (31) are each configured with a plurality of pixels in a unit of a pixel array that is a Bayer array.

4. The solid-state imaging device (1) according to claim 1, wherein
the shared pixels (31) are configured with a plurality of pixels having different exposure time.

5. The solid-state imaging device (1) according to claim 4, wherein
the shared pixels (31) each include a plurality of pixels having the different exposure time, the number of the pixels having one of the different exposure time being equal to the number of the pixels having another exposure time in each shared pixel (31).

6. The solid-state imaging device (1) according to claim 4, wherein
the shared pixels (31) are each configured with a plurality of pixels having the different exposure time in each shared pixel (31).

7. A solid-state imaging device operating method for a solid-state imaging device (1) according to claim 1, the method comprising:
connecting via a floating interconnection line (101) a plurality of FDs (floating diffusions), each FD (64) set in a unit of shared pixels (31) including at least two or more pixels, and the FDs (64) being provided in each row having a predetermined row number; and
changing over, by a switch (121), between connection and disconnection of the floating interconnection line (101) to the FDs (64) in each row on a basis of control signals generated by a vertical transfer control section (43), wherein
the switch (121) includes a plurality of switches connectable to the floating interconnection line (101) and corresponding to the FDs (64) in each row having the predetermined row number, and
the switches to be subjected to summation among the plurality of switches being connected to the floating interconnection line (101) in response to a demanded resolution, wherein the demanded resolution is low in a sensing mode and high in an imaging mode of the solid-state imaging device (1), and
wherein among the plurality of switches being connected to the floating interconnection line (101) the switches for the shared pixels (31) to be subjected to summation are connected at slightly delayed times to the floating interconnection line (101) in response to the demanded resolution so that on a basis of the control signals generated by the vertical transfer control section (43) the timing of connections of the switches to the floating interconnection line (101) is staggered.

## Patentansprüche

1. Festkörper-Bildgebungsvorrichtung (1), umfassend:
mehrere FDs (Floating Diffusions), wobei jede FD (64) in eine Einheit von gemeinsamen Pixeln (31) einschließlich mindestens zwei oder mehr Pixeln gesetzt ist;
eine potentialfreie Zwischenverbindungsleitung (101), die die in die Einheit der gemeinsamen Pixel (31) jeweils gesetzten FDs (64) verbinden, wobei die FDs (64) in jeder Reihe mit einer vorbestimmten Reihenzahl vorgesehen ist; und
einen Schalter (121), der zwischen Verbindung und Trennung der potentialfreien Zwischenverbindungsleitung (101) zu dem FDs (64) in jeder Reihe auf Basis von durch einen Vertikaltransfer-Steuerabschnitt (43) erzeugten Steuersignalen umschaltet, wobei
der Schalter (121) mehrere mit der potentialfreien Zwischenverbindungsleitung (101) verbindbare und den FDs (64) in jeder Zeile mit der vorbestimmten Zeilennummer entsprechende Schalter enthält, und die Schalter unterzogen werden sollen einer Summierung unter den mehreren Schaltern verbunden mit der potentialfreien Zwischenverbindungsleitung (101) als Reaktion auf eine angeforderte Auflösung, wobei die angeforderte Auflösung in einem Erfassungsmodus niedrig und in einem Bildgebungsmodus der Festkörper-Bildgebungsvorrichtung (1) hoch ist, und
wobei unter den mehreren mit der potentialfreien Zwischenverbindungsleitung (101) verbundenen Schaltern die Schalter für die gemeinsamen Pixel (31) zur Unterziehung einer Summierung zu geringfügig verzögerten Zeiten verbunden werden mit der potentialfreien Zwischenverbindungsleitung (101) als Reaktion auf die angeforderte Auflösung, so dass auf Basis der durch den Vertikaltransfer-Steuerabschnitt (43) erzeugten Steuersignale das Timing von Verbindungen der Schalter mit der potentialfreien Zwischenverbindungsleitung (101) versetzt ist.

2. Festkörper-Bildgebungsvorrichtung (1) nach Anspruch 1, weiter umfassend:
eine Vertikalsignalleitung (32), die Pixelsignale der gemeinsamen Pixel (31) über die FDs (64) in einer Einheit von Spalten der gemeinsamen Pixel (31) transferiert; und
eine spaltenüberspannende potentialfreie Zwischenverbindungsleitung, die die Pixelsignale zu verschiedenen Vertikalsignalleitungen (32) transferiert und mehrere potentialfreie Zwischenverbindungsleitungen (101) in verschiedenen Spalten verbindet.

3. Festkörper-Bildgebungsvorrichtung (1) nach Anspruch 1, wobei
die gemeinsamen Pixel (31) jeweils mit mehreren Pixeln in einer Einheit eines Pixelarrays konfiguriert sind, das ein Bayer-Array ist.

4. Festkörper-Bildgebungsvorrichtung (1) nach Anspruch 1, wobei
die gemeinsamen Pixel (31) mit mehreren Pixeln mit unterschiedlicher Belichtungszeit konfiguriert sind.

5. Festkörper-Bildgebungsvorrichtung (1) nach Anspruch 4, wobei
die gemeinsamen Pixel (31) jeweils mehrere Pixel mit der unterschiedlichen Belichtungszeit enthalten, wobei die Anzahl der Pixel mit einer der anderen Belichtungszeit gleich sind der Anzahl der Pixel mit einer anderen Belichtungszeit in jedem gemeinsamen Pixel (31).

6. Festkörper-Bildgebungsvorrichtung (1) nach Anspruch 4, wobei
die gemeinsamen Pixel (31) jeweils mit mehreren Pixeln mit der anderen Belichtungszeit in jedem gemeinsamen Pixel (31) konfiguriert sind.

7. Festkörper-Bildgebungsvorrichtungs-Betriebsverfahren für eine Festkörper-Bildgebungsvorrichtung (1) nach Anspruch 1, wobei das Verfahren umfasst:
Verbinden über eine potentialfreie Zwischenverbindungsleitung (101) von mehreren FDs (Floating Diffusions), wobei jede FD (64) in eine Einheit von gemeinsamen Pixeln (31) einschließlich mindestens zwei oder mehre Pixeln gesetzt ist, und die FDs (64) in jeder Zeile mit einer vorbestimmten Zeilennummer vorgesehen sind; und
Umwechseln, durch einen Schalter (121), zwischen Verbindung und Trennung der potentialfreien Zwischenverbindungsleitung (101) mit dem FDs (64) in jeder Zeile auf Basis von durch einen Vertikaltransfer-Steuerabschnitt (43) erzeugten Steuersignalen, wobei
der Schalter (121) mehrere mit der potentialfreien Zwischenverbindungsleitung (101) verbindbare und den FDs (64) in jeder Zeile mit der vorbestimmten Zeilennummer entsprechende Schalter enthält, und
die Schalter unterzogen werden sollen einer Summierung unter den mehreren Schaltern verbunden mit der potentialfreien Zwischenverbindungsleitung (101) als Reaktion auf eine angeforderte Auflösung, wobei die angeforderte Auflösung in einem Erfassungsmodus niedrig und in einem Bildgebungsmodus der Festkörper-Bildgebungsvorrichtung (1) hoch ist, und
wobei unter den mehreren mit der potentialfreien Zwischenverbindungsleitung (101) verbundenen Schaltern die Schalter für die gemeinsamen Pixel (31) zur Unterziehung einer Summierung zu geringfügig verzögerten Zeiten verbunden werden mit der potentialfreien Zwischenverbindungsleitung (101) als Reaktion auf die angeforderte Auflösung, so dass auf Basis der durch den Vertikaltransfer-Steuerabschnitt (43) erzeugten Steuersignale das Timing von Verbindungen der Schalter mit der potentialfreien Zwischenverbindungsleitung (101) versetzt ist.

## Revendications

1. Dispositif d'imagerie à semi-conducteurs (1) comprenant :
une pluralité de FD (diffusions flottantes), chaque FD (64) étant située dans une unité de pixels partagés (31) comprenant au moins deux ou plus de deux pixels ;
une ligne d'interconnexion flottante (101) connectant les FD (64), chacune étant située dans l'unité de pixels partagés (31), les FD (64) étant fournies dans chaque rangée ayant un nombre de rangées prédéterminé ; et
un commutateur (121) commutant entre la connexion et la déconnexion de la ligne d'interconnexion flottante (101) aux FD (64) dans chaque rangée sur la base de signaux de commande générés par une section de commande de transfert vertical (43),
le commutateur (121) comprenant une pluralité de commutateurs pouvant être connectés à la ligne d'interconnexion flottante (101) et correspondant aux FD (64) dans chaque rangée ayant le nombre de rangées prédéterminé, et
les commutateurs devant être soumis à une sommation parmi la pluralité de commutateurs connectés à la ligne d'interconnexion flottante (101) en réponse à une résolution demandée, la résolution demandée étant basse dans un mode de détection et haute dans un mode d'imagerie du dispositif d'imagerie à semi-conducteurs (1), et
parmi la pluralité de commutateurs connectés à la ligne d'interconnexion flottante (101), les commutateurs pour les pixels partagés (31) devant être soumis à une sommation étant connectés à des moments légèrement retardés à la ligne d'interconnexion flottante (101) en réponse à la résolution demandée de sorte que, sur la base des signaux de commande générés par la section de commande de transfert vertical (43), la synchronisation des connexions des commutateurs à la ligne d'interconnexion flottante (101) est échelonnée.

2. Dispositif d'imagerie à semi-conducteurs (1) selon la revendication 1, comprenant en outre :
une ligne de signal verticale (32) transférant des signaux de pixels des pixels partagés (31) par l'intermédiaire des FD (64) dans une unité de colonnes des pixels partagés (31) ; et
une ligne d'interconnexion flottante chevauchant une colonne transférant les signaux de pixels à différentes lignes de signaux verticaux (32) et connectant une pluralité de lignes d'interconnexion flottantes (101) dans différentes colonnes.

3. Dispositif d'imagerie à semi-conducteurs (1) selon la revendication 1,
les pixels partagés (31) étant chacun configurés avec une pluralité de pixels dans une unité d'un réseau de pixels qui est une matrice de Bayer.

4. Dispositif d'imagerie à semi-conducteurs (1) selon la revendication 1,
les pixels partagés (31) étant configurés avec une pluralité de pixels ayant un temps d'exposition différent.

5. Dispositif d'imagerie à semi-conducteurs (1) selon la revendication 4,
les pixels partagés (31) comprenant chacun une pluralité de pixels ayant le temps d'exposition différent, le nombre de pixels ayant l'un des temps d'exposition différents étant égal au nombre de pixels ayant un autre temps d'exposition dans chaque pixel partagé (31).

6. Dispositif d'imagerie à semi-conducteurs (1) selon la revendication 4,
les pixels partagés (31) étant chacun configurés avec une pluralité de pixels ayant le temps d'exposition différent dans chaque pixel partagé (31).

7. Procédé de fonctionnement d'un dispositif d'imagerie à semi-conducteurs pour un dispositif d'imagerie à semi-conducteurs (1) selon la revendication 1, le procédé comprenant :
la connexion, par l'intermédiaire d'une ligne d'interconnexion flottante (101), d'une pluralité de FD (diffusions flottantes), chaque FD (64) étant située dans une unité de pixels partagés (31) comprenant au moins deux ou plus de deux pixels, et les FD (64) fournies dans chaque rangée ayant un nombre de rangées prédéterminé ; et
la commutation, par un commutateur (121), entre la connexion et la déconnexion de la ligne d'interconnexion flottante (101) aux FD (64) dans chaque rangée sur la base de signaux de commande générés par une section de commande de transfert vertical (43),
le commutateur (121) comprenant une pluralité de commutateurs pouvant être connectés à la ligne d'interconnexion flottante (101) et correspondant aux FD (64) dans chaque rangée ayant le nombre de rangée prédéterminé, et
les commutateurs devant être soumis à une sommation parmi la pluralité de commutateurs connectés à la ligne d'interconnexion flottante (101) en réponse à une résolution demandée, la résolution demandée étant basse dans un mode de détection et haute dans un mode d'imagerie du dispositif d'imagerie à semi-conducteurs (1), et
parmi la pluralité de commutateurs connectés à la ligne d'interconnexion flottante (101), les commutateurs pour les pixels partagés (31) devant être soumis à une sommation étant connectés à des moments légèrement retardés à la ligne d'interconnexion flottante (101) en réponse à la résolution demandée de sorte que, sur la base des signaux de commande générés par la section de commande de transfert vertical (43), la synchronisation des connexions des commutateurs à la ligne d'interconnexion flottante (101) est échelonnée.
